(19) Europäisches Patentamt
European Patent Office
Office européen des brevets

(11) Publication number: **0 013 511**
A1

(12) **EUROPEAN PATENT APPLICATION**

(21) Application number: **79303065.1**

(22) Date of filing: **28.12.79**

(51) Int. Cl.$^3$: **B 22 C 9/06**
B 22 C 7/00

(30) Priority: **03.01.79 GB 7900116**
**18.01.79 GB 7901916**

(43) Date of publication of application:
**23.07.80 Bulletin 80/15**

(84) Designated Contracting States:
**AT BE CH DE FR GB IT LU NL SE**

(71) Applicant: **KING, MAURICE HENRY**
**37, High Oaks Road**
**Welwyn Garden City Hertfordshire AL8 7BT(GB)**

(72) Inventor: **KING, MAURICE HENRY**
**37, High Oaks Road**
**Welwyn Garden City Hertfordshire AL8 7BT(GB)**

(74) Representative: **Godwin, Edgar James et al,**
**MARKS & CLERK 57-60 Lincoln's Inn Fields**
**London, W.C.2A 3LS(GB)**

(54) **A method of making a die member.**

(57) A die member model (22,24) is formed against a pattern (12) and a restraining surface or a second model or die member, and is separated from the pattern (12) by ejectors (15,23). The model (22,24) includes a reinforcement and is strong enough to resist deformation during separation. Investment is applied to the model (22,24) to form a shell mould which is then opened at a location remote from the surface of the model (22,24) corresponding to the working face of the die member. The integrity of the model is destroyed, the reinforcement remaining in non-fluid form, and the model is removed through the opening in the shell mould. A die member is then formed in the shell mould (31) and separated from it.

15
15
22
5
12
21
5
24
23
23
FIG 4

EP 0 013 511 A1

# A METHOD OF MAKING A DIE MEMBER

This invention relates to a method of making a die member for a material-shaping operation such as casting, moulding, forging, or stamping, the die member having a working face including a material-shaping surface.

Dies for moulding plastics and other materials and for die casting are usually made by the costly and laborious process of machining them in steel.

Processes for making dies have been proposed in which a model die member is first made by casting plaster of Paris against a part of the surface of a pattern, and separating the model from the surface. A body is then cast (e.g. in plaster of Paris or light metal) against the working face of the model and is then separated from the model. The surface of the body exposed on separation is coated with graphite and galvanically plated. Finally, a metal backing is cast onto the plated layer either before or after the layer is separated from the body. (See German Patent Specifications 470 862 and 888 602.) Such a process has problems of dimensional control and is difficult to perform.

Another process which has been proposed uses an aluminium basic pattern first produced from a wooden or other pattern in a sand mould. The basic pattern is preheated and coated with zirconium dioxide immediately before casting an aluminium initial die against the basic pattern. The aluminium is cast in the supercooled state. A further corresponding pattern of bonded refractory material is formed in the initial die, then removed and placed in a mould. Finally a ferrous metal die is cast in the mould against the refractory pattern. (British Patent Specification 1 469 746.) This is a complex process in which much care has to be taken in handling the various items and in controlling process parameters such as temperature.

The present invention is based on the idea of using an investment casting or lost wax process, which is capable of high dimensional accuracy. This type of process commonly utilises a wax model. In considering the adoption of such a process in a method of

producing a die member it is clear that there will be problems of handling, particularly if the model is formed against a pattern and has to be separated from the pattern by force. Model materials which are easy to handle and which provide good dimensional reproduction and high accuracy of surface finish are known (see, for example, U.S. patent 4 046 579), but they required very high temperatures to render them sufficiently fluid to escape from the shell mould formed by investment. In the conventional process the model has to be completely liquefied or vaporised. Models containing or consisting of non-meltable plastics have to be burnt out or depolymerised and vaporised.

In order to avoid the adverse consequences of these practical limitations, the invention provides a method of producing a die member for a material-shaping operation, the die member having a working face including a material-shaping surface, the method comprising: making a model of the die member by forming settable material in intimate contact with a part of the surface of a pattern and including a reinforcement in the model; separating the model from the pattern, the reinforced model being sufficiently strong to resist distortion during separation; forming a shell mould by applying investment around the whole model and in intimate contact with at least the surface of the model corresponding to the working face of the die member; exposing the model by forming an opening in the shell mould at a location remote from the said surface; destroying the integrity of the model, the reinforcement remaining in non-fluid form; removing the disintegrated model through the opening; forming a die member in the shell mould; and removing the shell mould from the die member.

Since the shell mould is opened at a location remote from the model working face, the opening can be made as wide as is necessary to allow removal of the parts of the model, which may include solid items forming a reinforcing structure and softened portions of the model material. Thus a wide variety of reinforcements and settable materials can be used. In particular, the settable material may comprise different substances applied separately to the pattern. The integrity of the model can be destroyed in a number of ways, for instance by melting, dissolving, or even evaporating the settable material wholly or partly.

By making use of the invention, complex dies can be produced from a pattern quickly and cheaply, with the minimum of machining. The pattern may be of any convenient material, may be a natural object or an existing manufactured item, and may have complex surfaces and textures. The same pattern can be used to make several die members or to make gang dies. In order to reduce the risk of damage, part of the investment may be applied to the model before it is separated from the pattern.

In a preferred method the die member is one of a plurality of die members which match at their working faces to define a cavity corresponding to the pattern. In the preferred method a first die member model is formed against a restraining surface adjacent the part of the pattern on which the model is formed. The restraining surface thus defines the joint face of the model; the restraining surface may be defined by a restraining agent (e.g. clay) in which the pattern is partly embedded and/or another model die member and/or another finished die part. The thus formed joint face of the model or of the resulting die part is then used to define all or part of the restraining surface for another model formed on the pattern. Thus accurate matching of the joint faces of the die members is ensured.

The invention will be described further, by way of example, with reference to the accompanying drawings, in which:

Figure 1 is an axial section through a pattern ejector;

Figure 2 shows, in section, the making of a first die member model by applying settable material to a pattern;

Figure 3 shows, in section, the making of a second die member model matching the first;

Figure 4 shows, in section, the models being separated from the pattern;

Figure 5 shows the models, in section, fitted together and machined;

Figure 6 shows, in section, one of the models covered with investment to form a shell mould;

Figure 7 shows the shell mould, in section, after the model has been removed;

Figure 8 illustrates, in section, the initial application of investment to the outside of the models while they are clamped together; and

Figure 9 illustrates, in section, the application of investment to both the inside and the outside of the models while they are connected together.

The drawings illustrate the production of a casting die comprising two die parts which have matching joint faces forming part of the working faces of the die parts, the working faces including material-shaping surfaces which together define the casting cavity of the die.

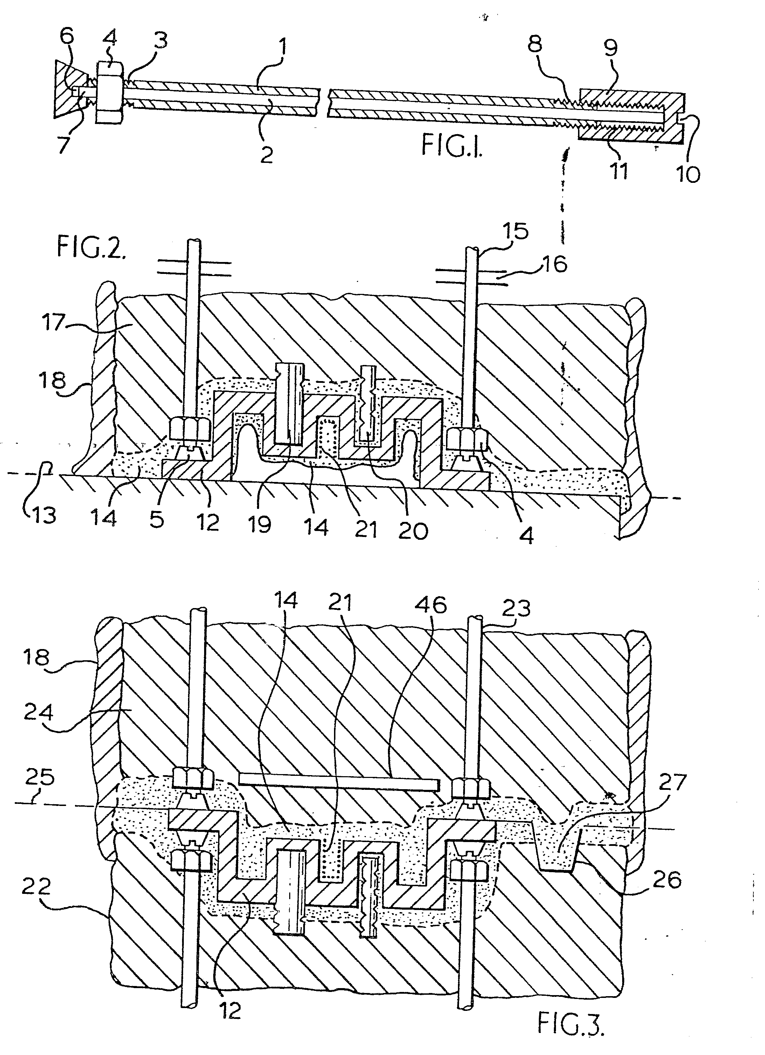

A pattern 12 of the article to be cast in the die is positioned on a plane restraining surface 13 (Figure 2) of a table defining the plane 25 (Figure 3) of the joint faces. Pattern ejectors 15, held in a jig 16, are applied to the pattern 12. The surface 13 and the pattern 12 are coated with a parting agent, e.g. polyvinyl alcohol, and settable material is applied to them around metal or plastics inserts 19 and 20 to form a first die part model 22.

The settable material consists of a first layer 14 containing strengthening fibres, e.g. glass fibres, and a second layer 17. The first layer 14 is designed to take the finest detail of the pattern 12 and to form a hard surface; it may, for example, be an epoxy resin or may comprise a hard wax, such as carnauba wax, mixed with a soft wax, resin, and one or more fillers, such as mineral black and powdered slate. The second layer 17, which forms the bulk of the model, is designed to have minimal warping or cracking upon setting, and to be machinable and cheap; it may, for example, comprise modelling wax mixed with one or more fillers, such as mineral black and powdered slate. A temporary container 18 is used to support the material until it has set.

The first model 22 is then removed from the surface 13 and inverted. Jackets 26 are machined in its plane surface, and pattern ejectors 23 are applied to the pattern 12 in axial alignment with the ejectors 15. Settable material is then applied to the pattern 12 and the adjacent surface of the model 22 to form a second die part model 24 in the same way as the first. Part of the first layer 14 of the settable material for the second model was applied before the pattern 12 was placed on the surface 13 (see Figure 2); and the first layer 14 includes a fibre-glass mat 21. A metal or plastics strengthening plate 46 is also included in the second model 24. The settable material enters the sockets 26 of the first model 22 to form locating projections 27.

It will be appreciated that the restraining surface 13 may be provided in other ways, depending on the shape of the pattern. It may, for example, be provided by a temporary restraining agent, e.g. of adhesive tape or a plastically deformable material (such as clay) in which the pattern 12 is partly embedded. Alternatively, it may in certain cases be permissible to do away with the restraining surface completely, since the joint surface formed on the first model 22 will be matched precisely by the corresponding surface of the second model 24 formed against it. Another possibility is to form a die part model against an actual die part previously made.

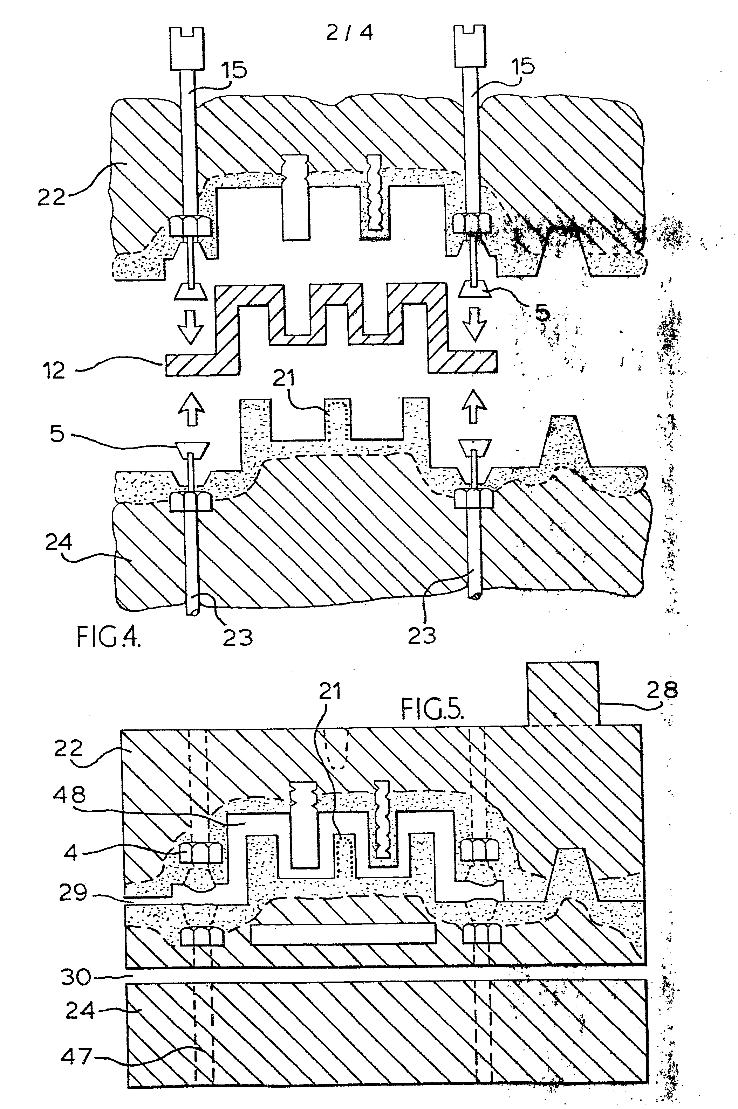

The models 22,24 are separated from the pattern 12 by contemporaneous action of the ejectors 15 and 23 (Figure 4) so as to avoid the application of unbalanced forces to the pattern 12, which might cause damage. Distortion of the models 22,24 is resisted by the reinforcement constituted by the strengthening fibres, the inserts 19,20, the fibre-glass mat 21, and the strengthening plate 46.

Each ejector 15,23 comprises (Figure 1) a rod 2 extending along a tube 1 which has a screw-threaded end 3 engaged in a nut 4. The projecting end 7 of the rod 2 engages in a slot 6 in a detachable head 5 which is to abut against the pattern. The other end 8 of the tube 1 is screwed into a cap 9 having an internal thread 11 and an actuating slot 10. When the cap 9 is turned, it drives the rod 2 along the tube 1.

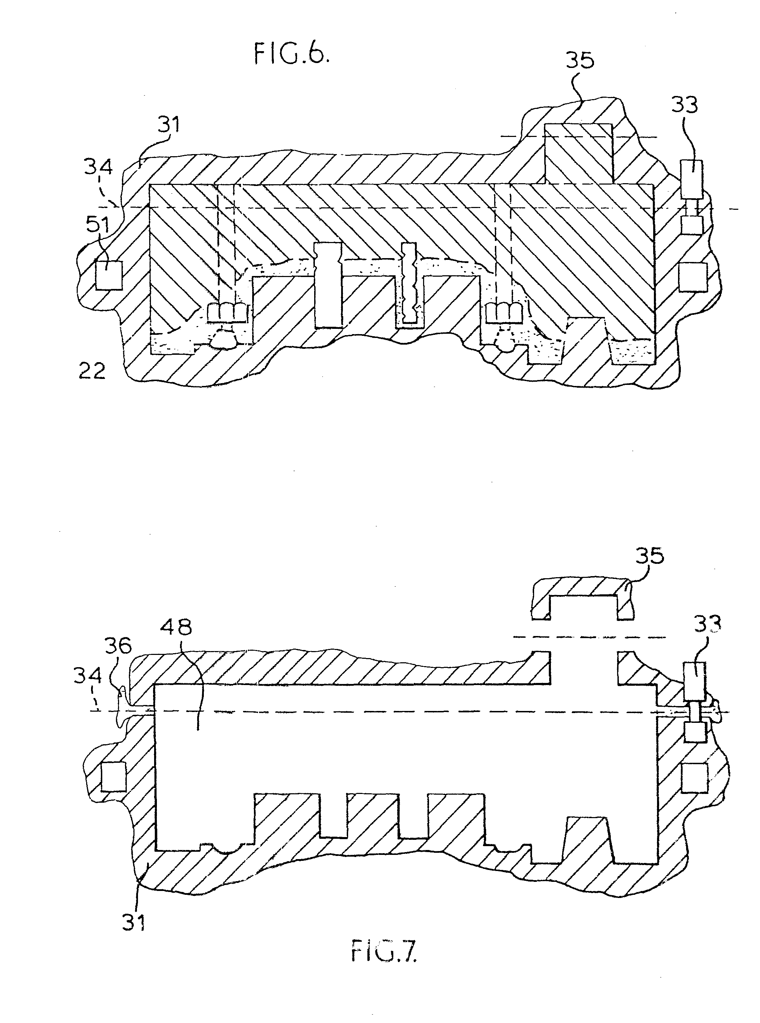

After the models 22,24 have been separated from the pattern 12, the ejectors 15,23 are removed by unscrewing the tubes 1 from the nuts 4, which are left in the models. The resulting holes 47 are filled with settable material. The models 22,24 are then clamped together again (Figure 5) and subjected to machining to form flat outer surfaces, a sprue 29, and a lug 28 and a channel 30 to facilitate handling.

Each model is then covered with a ceramic investment (Figure 6), which is applied around and in intimate contact with the whole model, to form a shell mould 31. A supporting frame 51 and a screw fitting 33 are embedded in the investment. The shell mould 31 is then opened by cutting it along a plane 34 or by cutting off a cap 35, in order to form an opening through which the model can be removed. The integrity of the model is then destroyed, for instance by heating the shell mould so that the settable material melts, at least partly, and the disintegrated model is removed through the opening in the shell mould; the size of the opening allows easy removal, even though the model contains parts which remain solid, such as the reinforcement and the nuts 4. An empty casting cavity 48 is thus left in the shell mould. The mould is closed by means of the screw fitting 33 and is sealed with sealing material 36. Alternatively, the shell mould is left open if this facilitates subsequent treatment.

A die part is then formed in the shell mould 31 by pouring molten metal (e.g. steel) into the cavity 48. Alternatively, a first, metal, layer may be formed (e.g. by spraying) in intimate contact with the part of the mould that defines the working face of the die part, and a backing of metal (e.g. bismuth-tin alloy) or other material (e.g. glass-fibre or carbon-fibre reinforced) is then cast on the first layer. The first layer can conveniently be made harder than the backing and, since the shell mould 31 is ceramic, may be of higher melting point than steel, so that the die part is more durable than conventional ones. A further advantage is that a backing which does not shrink on solidifying can be chosen. Finally, the shell mould is broken away from the die part.

Should the two die parts produced as described above not fit sufficiently exactly, so that there is to much flare on the parting line of the product cast in the die, the unwanted space may be closed. A flux and a fusible metallic filler (e.g. a brazing material) are applied to the joint face of one of the die parts. The material-shaping surface of this die part and the whole of the working face of the other die part are treated by oxidation or another chemical process preventing adhesion of the metallic filler. The die parts are then pressed together and heated so that the metallic filler fuses and occupies the above-mentioned unwanted space.

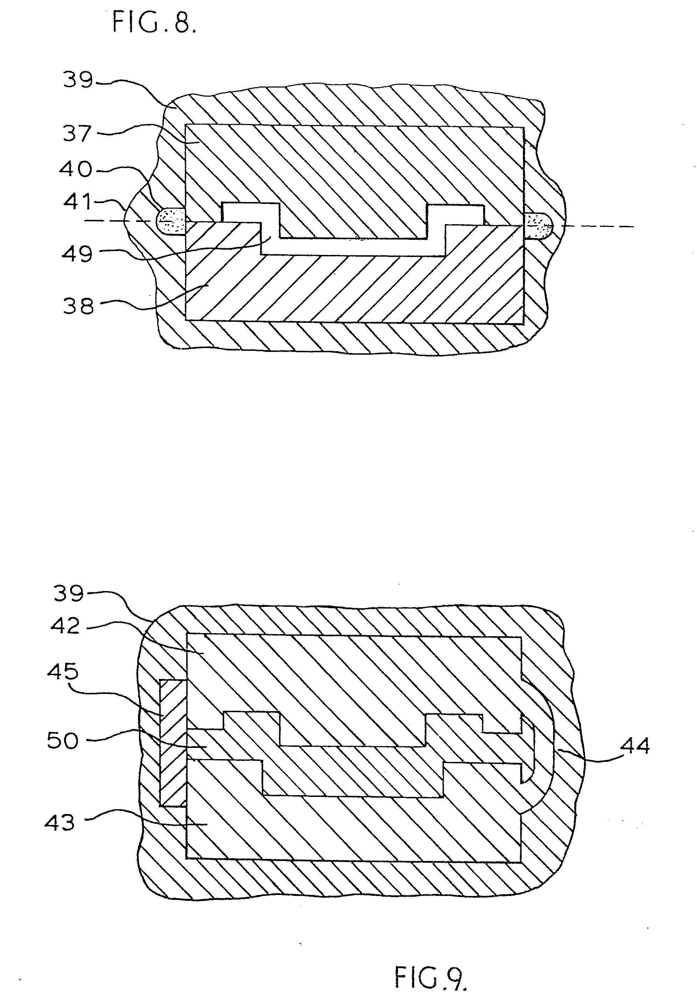

Figure 8 illustrates how the application of investment 39 to two models 37,38 defining a cavity 49 may be started while they are clamped together, in order to minimise any risk of distortion. A spacing lug 40 is provided around the joint-line, so that the coated models may be separated without damaging their faces. Investment is then completed. Alternatively, two models 42,43 may be linked by bridges 44 of settable material or connectors 45 (Figure 9), so that the investment 39 runs between them. In this way a single shell mould for producing two die parts can be made.

To get the settable Material off the Pattern, if there is to be any dimensional change as it sets, it must contract slightly in cavities and expand slightly around the circumferences.

CLAIMS

1. A method of producing a die member for a material-shaping operation, the die member having a working face including a material-shaping surface, the method comprising: making a model (22,24) of the die member by forming settable material in intimate contact with a part of the surface of a pattern (12) and including a reinforcement (19,20,21,46) in the model; separating the model (22,24) from the pattern (12), the reinforced model being sufficiently strong to resist distortion during separation; forming a shell mould (31) by applying investment around the whole model (22,24) and in intimate contact with at least the surface of the model corresponding to the working face of the die member; exposing the model (22,24) by forming an opening in the shell mould (31) at a location remote from the said surface; destroying the integrity of the model (22,24), the reinforcement remaining in non-fluid form; removing the disintegrated model through the opening; forming a die member in the shell mould (31); and removing the shell mould (31) from the die member.

2. A method as claimed in claim 1, in which the settable material is formed against a restraining surface (13) adjacent the said part of the surface of the pattern (12).

3. A method as claimed in claim 2, in which the restraining surface is at least partly defined by a second model (22) formed in intimate contact with another part of the surface of the pattern (12).

4. A method as claimed in claim 2, in which the restraining surface is at least partly defined by a second die member in intimate contact with another part of the surface of the pattern (12).

5. A method as claimed in claim 2, in which the restraining surface is at least partly defined by a restraining agent in which the pattern (12) is partly embedded.

6. A method as claimed in any of claims 1 to 5, in which the settable material comprises different substances applied separately.

7. A method as claimed in any of claims 1 to 6, in which the model (22,24) is separated from the pattern with the aid of a pattern ejector (15,23) embedded in the model (22,24).

8. A method as claimed in claim 7, in which the ejector (15,23) comprises a tube (1) embedded in the model (22,24), and a rod (2) extending along the tube (1), the pattern (12) being ejected by moving the rod (2) along the tube (1).

9. A method as claimed in claim 8, in which the tube (1) is in screw-threaded engagement with a member (4) embedded in the model (22,24), the tube (1) being unscrewed and released from the model (22,24) together with the rod (2) after the pattern (12) has been ejected.

10. A method as claimed in any of claims 7 to 9, in which two models (22,24) are separated from the pattern (12) using ejectors (15,23) which are axially aligned and act on the pattern (12) from opposite directions.

11. A method as claimed in any of claims 1 to 10, in which part of the investment is applied to the model (22,24) before the model is separated from the pattern (12).

12. A method as claimed in any of claims 1 to 11, in which the die member is formed in the shell mould (31) by first forming a layer of metal in intimate contact with the part of the shell mould (31) corresponding to the working face of the die member, and subsequently casting another material into the shell mould.

6
4
3
1
8
9
7
2
FIG.1.
11
10
FIG.2.
15
16
17
18
13
14
5
12
19
14
21
20
4
14
21
46
23
18
24
25
27
22
26
12
FIG.3.

15
15
22
5
12
21
5
24
23
23
21
28
22
48
4
29
30
24
47

FIG.4.

FIG.5.

FIG.6.

35
33
31
34
51
22

35
33
48
36
34
31

FIG.7.

FIG.8.

39
37
40
41
49
38

39
42
45
50
43
44

FIG.9.

0013511

European Patent Office

# EUROPEAN SEARCH REPORT

Application number: EP 79 30 3065

## DOCUMENTS CONSIDERED TO BE RELEVANT

| Category | Citation of document with indication, where appropriate, of relevant passages | Relevant to claim |
|---|---|---|
| X | FR - A - 1 180 255 (J. JEAN-JACQUES)<br>* Complete document * | 1 |
| X | FR - A - 934 543 (USINES A GAZ)<br>* Complete document * | 1 |
| | US - A - 3 461 749 (PRECISE SERVICE)<br>* Claim 1 * | 1 |
| | US - A - 1 912 889 (K.W. COUSE)<br>* Page 1, lines 63-100; figures 1-10; page 8, lines 1-51 * | 1 |
| | FR - A - 926 498 (REPRODUCTION METALLIQUE INDUSTRIELLE)<br>* Page 1, lines 50-56; page 8, lines 1-45; figures 1-10 * | 2-4 |
| | FR - A - 937 901 (AUSTENAL LABORATORIES)<br>* Abstract; figures 1-6 * | 2-4 |
| A | US - A - 2 540 212 (G.W. PAGET)<br>* Figures 1-10 * | |

CLASSIFICATION OF THE APPLICATION (Int Cl)

B 22 C 9/06
7/00

TECHNICAL FIELDS SEARCHED (Int.Cl.)

B 22 C
B 22 D
B 23 P
B 21 D

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-04-1980 | MAILLIARD |

EPO Form 1503.1 06.78